(19)

Europäisches
Patentamt
European
Patent Office
Office européen
des brevets

(11) **EP 3 511 856 A1**

(12) **EUROPEAN PATENT APPLICATION**

(43) Date of publication:
**17.07.2019 Bulletin 2019/29**

(21) Application number: **18151797.0**

(22) Date of filing: **16.01.2018**

(51) Int Cl.:
*G06F 21/55* (2013.01)  *H04L 29/06* (2006.01)
*H04W 12/12* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Nokia Solutions and Networks Oy
02610 Espoo (FI)**

(72) Inventors:
• **EINZIGER, Gil
  4588000 Elishama (IL)**
• **SEGALL, Itai
  6962077 Tel-Aviv (IL)**
• **BEN BASSAT, Ran
  3686411 Nesher (IL)**

(74) Representative: **Nokia EPO representatives
Nokia Technologies Oy
Karaportti 3
02610 Espoo (FI)**

(54) **METHOD, APPARATUS AND COMPUTER READABLE MEDIUM TO DETECT AT LEAST ONE CHANGE IN CONTINUOUS DATA**

(57)    Method, apparatus and computer readable medium to detect changes in continuous data is described. The method comprises a step of determining first variations of at least one parameter within data of a first sub-set of the continuous data, and a step of determining at least one thresholds using data of a second sub-set of the continuous data, each threshold being associated to one of the parameters, and a step of comparing the first variations and the thresholds change being detected if one of the first variations is above the associated threshold

**Fig. 1**

Numerical estimation potential
changes — 101

Determination of a threshold — 102

Comparison of the potential change
and the threshold — 103

Printed by Jouve, 75001 PARIS (FR)

**Description**

FIELD OF INVENTION

The present subject matter relates to a method to detect changes in continuous data. More specifically this method could use approximate sliding windows and the data could be for example metric data.

BACKGROUND

Large systems are composed of many elements, such as processes, databases, virtual machines and physical infrastructure. Monitoring such systems and ensuring their correct behavior is a fundamental challenge. Specifically, each component has numerous metrics that can be monitored and each such metric has a meaning that one needs to understand to identify a problem. Thus, experts that examine such systems are faced with an overwhelming amount of data. Such an abundance limits their capability to identify the problem.

Due to the abundance of metrics that can be monitored, it is possible that changes in system state, usage, or behavior, are reflected by some of the metrics. For example, a security breach such as the spreading of a virus, or a data theft may be reflected by, e.g. a virtual machine that usually does not use its network card and suddenly sends traffic out. A machine may consume more memory than it usually does, or has some deviations in CPU consumption or even in an application level metric. However, with all the abundance of data identifying these changes is challenging. An additional challenge is that we do not know exactly what to look for and usually cannot set thresholds in advance.

Software updates are another domain in which the method of the present divulgation can use. With continuous delivery and continuous deployment methodologies, software systems are updated at a rapid pace, and autonomous monitoring and detection of issues are crucial. Moreover, even installation of security updates is currently delayed by companies for half a year on average because there is no method to ensure that functionality is preserved upon applying a security update. Thus, a capability to detect changes in a very large number of metrics can provide Information Technology (IT) managers with a tool to identify emerging problems following software updates.

The present subject matter describes a way to detect change or anomaly detection at a fine granularity. In other words, the present subject matter allows the identification which of a huge number of measurable entities has recently changed its behavior. The present subject matter allows this identification even without predefined thresholds and reports when the metric crosses these thresholds.

SUMMARY

This summary is provided to introduce concepts related to methods to detect changes in continuous data.

In one embodiment, a method to detect at least one change in continuous data is described. The method comprises a step of determining first variations of at least one parameter within data of a first sub-set of the continuous data, and a step of determining at least one thresholds using data of a second sub-set of the continuous data, each threshold being associated to one of the parameters, and a step of comparing the first variations and the thresholds a change being detected if one of the first variations is above the associated threshold.

In another embodiment, an apparatus to detect at least one change in continuous data is described. The apparatus comprises a module of determining first variations of at least one parameter within data of a first sub-set of the continuous data, and a module of determining at least one thresholds using data of a second sub-set of the continuous data, each threshold being associated to one of the parameters, and a module of comparing the first variations and the thresholds change being detected if one of the first variations is above the associated threshold.

In another embodiment, a computer-readable medium is described. The computer-readable medium having embodied thereon a computer program configured to realize a method to detect at least one change in continuous data. The method comprises a step of determining first variations of at least one parameter within data of a first sub-set of the continuous data, and a step of determining at least one thresholds using data of a second sub-set of the continuous data, each threshold being associated to one of the parameters, and a step of comparing the first variations and the thresholds change being detected if one of the first variations is above the associated threshold.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of a system and/or methods in accordance with embodiments of the present subject matter are now described, by way of example only, and with reference to the accompanying figures, in which:

Figure 1 presents a first embodiment of the method of the present subject matter.

Figure 2 presents the method of the present subject matter.

Figure 3 presents example of continuous data

Figure 4 presents an embodiment of the method of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

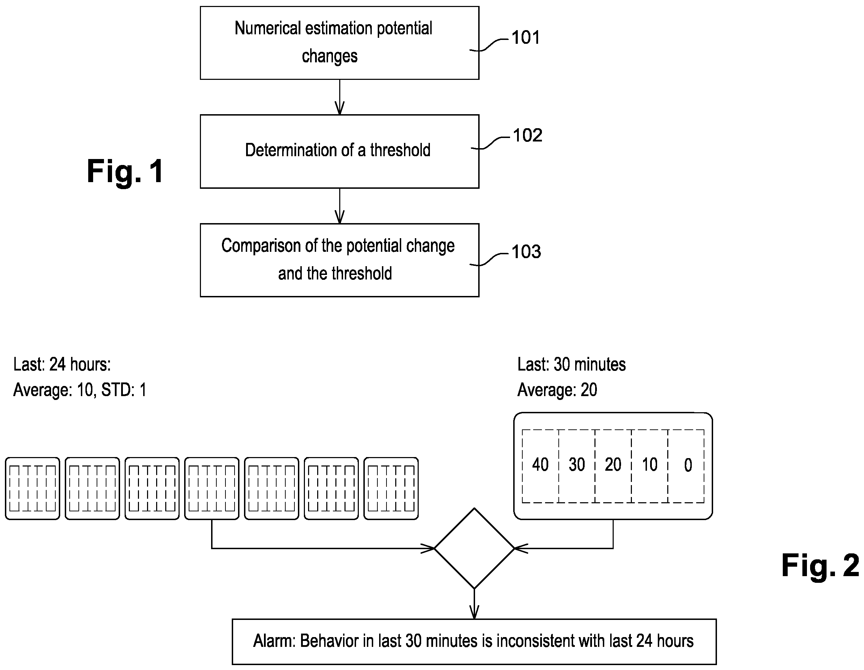

The figure 1 presents a first embodiment of the method of the present subject matter. This method allows the detection of at least one change in continuous data. This method comprises:

- A step (101) of determining first variations of at least one parameter within data of a first sub-set of the continuous data, and

- A step (102) of determining at least one thresholds, using data of a second sub-set of the continuous data, each threshold being associated to one of the parameters, and

- A step (103) of comparing the first variations and the thresholds, a change being detected if one of the first variations is above the associated threshold.

The method of the present subject matter utilizes two sliding windows to detect anomalies. The first is called 'lead' window and the second called 'lag' window.

The method of the present divulgation has the following advantages:

- The window used may be approximated windows and are very space efficient.
- The computations may also be approximated and are very space efficient.
- This method is fully autonomous and requires no configuration.
- Thanks to the dynamic adjustment of the detection threshold to the behavior of the metric, this method requires no maintenance.
- The runtime of this method is constant and doesn't depend on various configuration parameters.
- This method can perform the analysis with compact and approximate data structures.

The figure 2 presents in another way the method of the present subject matter. The method detects changes in continuous metrics using exact or approximate sliding windows. For example, this method can use exact or approximate averages, standard deviations, and maximums on such windows. These capabilities compose together an efficient and scalable change detection system which is explained below. To be more precise the proposed method monitors a metric and detects changes in its current behavior compared to its recent behavior. For example, the method of the present subject matter can monitor CPU, memory and network utilization and alert the controller if the utilization pattern changes for one or more of these resources.

As previously described, in an embodiment the method is configured to maintain the mean and standard error over two (approximate) windows - a small 'lead window' and a large 'lag window'. Furthermore, in some embodiments, the method is configured to calculate standard error without maintaining the entire window in memory.

Additionally, the method of the present subject matter dynamically changes the detection threshold per the observed behavior of the metric on the large window. Doing so allows it to eliminate the human factor and thus be applicable to large systems.

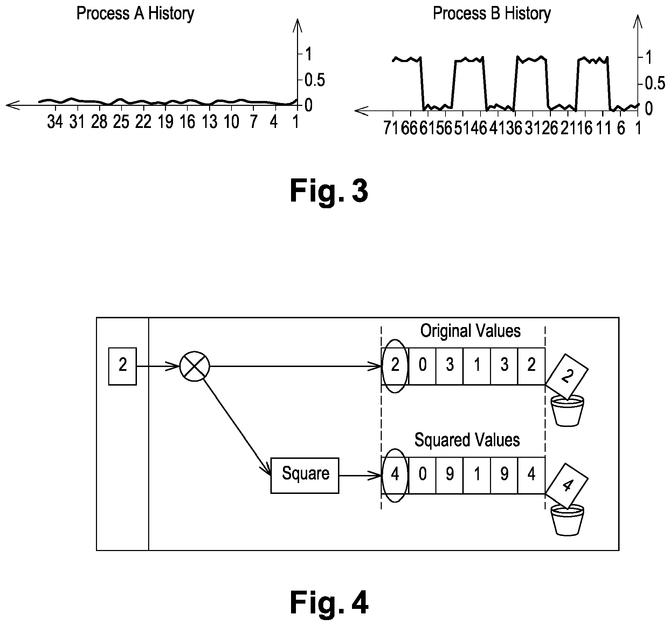

Figure 3 illustrates the behavior of the metric on the lag window. If we face a sudden rise of the metric to 1, using the proposed method this change will be reported for process A and will be ignored for process B. Intuitively, the standard error for Process A is small and a rise of the metric to 1 will significantly change it and the method of the present subject matter would raise an alarm. In contrast, the standard error of Process B is already large and thus a rise to 1 will not change it significantly. Thus, using the proposed method, as the threshold will depend on the previously encounter standard error, an alarm will not be raised for Process B.

In another embodiment, the method is estimating the monitored value with an additive or a multiplicative error, approximate the sliding window with a slack window or any combination of the two.

In an embodiment of the method presented figure 1 the step 101 of determining first variations of at least one parameter is configured to determine the first variations using standard deviation ratio based estimator.

In a further embodiment, the step 101 of determining first variations of at least one parameter is configured to calculate the standard deviation ratio base estimator using the following equation:

$$\sigma_{\overline{W}} = \sqrt{\frac{S_{x^2} - |\overline{W}|m^2}{|\overline{W}| - 1}}$$

Wherein:

- $\sigma_{\overline{W}}$ is the first variation of the data of the first sub-set of continuous data $\overline{W}$
- $|\overline{W}|$ is the number of elements of the fist sub-set of continuous data $\overline{W}$
- $S_{x2}$ is the sum of the square of the data of the first sub-set of continuous data $\overline{W}$
- $m$ is the sum of the data of the first sub-set of continuous data $\overline{W}$

In a further embodiment, the step 101 of determining first variations of at least one parameter is configured, when a new data is incorporated within the first sub-set of continuous data $\overline{W}$, to update $m$ the sum of the data of the first sub-set of continuous data $\overline{W}$, by using the value of the new data and the previous value of $m$, the sum of the data of the sub-set of continuous data $\overline{W}$.

In a further embodiment, the step 101 of determining first variations of at least one parameter is configured when a new data is incorporated within the first sub-set of continuous data $\overline{W}$, to update $S_{x2}$ the sum of the square of the data of the sub-set of continuous data $\overline{W}$, by using the value of the new data and the previous value of $S_{x2}$ the sum of the square of the data of the sub-set of continuous data $\overline{W}$.

In other words, the algorithm to update the standard deviation of data over a sliding window is configured as presented below.

We will use a model in which for $l \in \mathbb{N}$, we denote $[l] \triangleq \{0, 1, \ldots, l\}$. We consider a stream of data elements $x_1$, $x_2$, ... , $x_t$, where at each step a new element $x_i \in \mathbb{R}$ is added to $S$ where $S$ represents all the elements of the continuous data stream. A $W$-sized window contains only the last $W$ elements: $x_{t-W+1} \ldots x_t$. We say that $F$ is a $\tau$-slack $W$-sized window if there exists $c \in [(W_\tau) - 1]$ (The notation $[(W_\tau) - 1]$ means all the number 0 to $(W_\tau) - 1$) such that $F = x_{t-(W+c)+1} \cdots x_t$. Denote by $S_X = \sum_{x \in X} x$ the sum of a set of numbers $X$ and by $m_X \triangleq \frac{S_X}{|X|}$ mean. The standard deviation of $X$, $\sigma_x$, which measures how far are the observations from the mean, is defined as:

$$\sigma_x \triangleq \sqrt{\frac{\sum_{x \in X}(x - m_x)^2}{|X| - 1}}$$

The method of the present subject matter will use algorithms for determining standard deviation. These algorithms need to support two operations:

1. Update operation with input $x_t$ and with task of processing a new element $x_t \in \mathbb{R}$.

2. Output operation, this operation returns a tuple $\langle m, \sigma, c \rangle$, with $c \in [W_\tau - 1]$ is the slack size, wherein $m$, is an estimation of the last $W + c$ elements' average and $\sigma$ is an estimation of the last $W + c$ elements' standard deviation.

In a nutshell, these algorithms will use as an input a new input and will return updated versions of the mean, the standard deviation and (implicitly) the window's size.

The proposed method allows the determination of the mean and standard deviation of a sub set of continuous delimited by a time window. We denote by *W* the set of items included in the window. The algorithm uses a window summing algorithm, as presented above, as a black box. We assume that this algorithm supports two operations presented above. We can for example use the algorithm described within the article of Ran Ben Basat, Gil Einziger, Roy Friedman, and Yaron Kassner, with title "Efficient Summing over Sliding Windows" and published in SWAT, 2016, or the article of Ran Ben-Basat, Gil Einziger, and Roy Friedman title "Efficient network measurements through approximated windows" and published in CoRR, abs/1703.01166, 2017 or the article of Phillip B. Gibbons and Srikanta Tirthapura with title Distributed streams algorithms for sliding windows and published in SPAA, 2002.

We employ two separate instances of the window summing algorithm. The first one sums the metric on the window and is used to compute the mean. The second one computes the sum of squared values over a sliding window. This is illustrated in Figure 4. We use the following identity for the window standard deviation $\sigma_W$ :

$$\sigma_W = \sqrt{\frac{\sum_{x \in W}(x - m_w)^2}{|W| - 1}} = \sqrt{\frac{\sum_{x \in W} x^2 - 2m_w \sum_{x \in W} x + W m_w^2}{|W| - 1}} = \sqrt{\frac{\sum_{x \in W} x^2 - W m_w^2}{|W| - 1}}$$

This allows us to compute $\sigma_W$ from the sum of squares and the mean of the window elements. A pseudo code of this method appears in Algorithm 1.

| Algorithm 1 Window Standard Deviation Algorithm | |
| --- | --- |
| | Initialization: $A_x, A_{x2} \triangleq$ window summing algorithms. |
| | 1: function UPDATE($x$) |
| 2: | $A_x$.ADD($x$) |
| 3: | $A_{x2}$.ADD($x^2$) |
| 4: | function OUTPUT |
| 5: | $(\widehat{S_x}, \widehat{|W|}) \leftarrow A_x.\text{QUERY}()$ |
| 6: | $\hat{m} \leftarrow \widehat{S_x} / \widehat{|W|}$ |
| 7: | |
| 8: | $(\widehat{S_{x^2}}, \widehat{|W|}) \leftarrow A_{x^2}.\text{QUERY}()$   $\hat{\sigma} \leftarrow \sqrt{\frac{\widehat{S_{x^2}} - \widehat{|W|} \cdot \hat{m}^2}{\widehat{|W|} - 1}}$ |
| 9: | return $(\hat{m}, \hat{\sigma}, \widehat{|W|} - W)$ |

In a further embodiment, the step 102 of determining at least one thresholds, using data of a second sub-set of the continuous data, is configured to determine the threshold as being the maximum of second variations of the parameter associated to the thresholds within data of a second sub-set of the continuous data,

In a further embodiment, the step 102 of determining at least one thresholds, using data of a second sub-set of the continuous data, is configured to determine these second variations using standard deviation ratio based estimator.

In a further embodiment, the step 102 of determining at least one thresholds, using data of a second sub-set of the continuous data, is configured when a new data is incorporated within the second sub-set of continuous data, to update the maximum of these second variations by using the value of the new data and the previous value of the maximum of these second variations.

The algorithm to compute the maximum over an approximated window is using the above-presented model. We process a stream of elements $x_1, \dots x_t$ such that at time $l$ we receive $x_l \in [R]$. Intuitively, we want to get an interval $i, j$ at query time and compute the maximum of that interval; the slack here means that we may select any interval containing $i, j$ that exceeds the query interval by at most $W\tau$ on each side. We fix some $\tau > 0$ and consider the $\tau$-Slack Approximate Ad-Hoc Maximum problem defined as follows:

Definition: Consider a query $MAX(i,j)$ for $0 \le i \le j \le W$, after seeing $t$ items. The algorithm should return a tuple $\langle M, c_i, c_j \rangle$ such that $c_i, c_j \in [W\tau - 1]$ and $M = max\{x_l | l \in [t - i + c_i] \backslash [t - j - c_j]\}$.

Our algorithm here runs as follows - we break the stream into $W_\tau$-sized blocks and compute the maximum within each block, saving it in a circular buffer. When getting a query, we consider the smallest block-interval that contains the query interval and compute its maximum from the cyclic buffer. The processing time of our algorithm is $O(1)$ while its query time is constant for any fixed $\tau$. Treating $\tau$ as a parameter, queries are answered in $O(\tau - 1)$ time which can be improved further using standard techniques to $O(log\ \tau - 1)$.

We provide the pseudo code of our solution in Algorithm 2 below:

| Algorithm 2 Window Maximum Algorithm | | |
|---|---|---|
| | Initialization: $offset \leftarrow 0, c \leftarrow 0, b \leftarrow \overline{0}, M \leftarrow 0.$ | |
| | 1: function UPDATE($x$) | |
| 2: | $M \leftarrow$ max $\{M,x\}$ | |
| 3: | $offset \leftarrow (offset + 1)$ mod $W\tau$ | |
| 4: | if $offset = 0$ then | |
| 5: | $b_c \leftarrow M$ | ▷ Record the maximum of the finished block |
| 6: | $c \leftarrow (c + 1)$ mod $\tau^{-1}$ | |
| 7: | $M \leftarrow 0$ | |
| 8: | function MAX($i,j$) | |
| 9: | $oldIdx \leftarrow (W\tau \cdot c + offset - j)$ mod $W$ | ▷ The index, modulo $W$, of the oldest queries element |
| 10: | $newIdx \leftarrow (W\tau \cdot c + offset - i)$ mod $W$ | |
| 11: | $oldBlk \leftarrow \lfloor oldIdx/W\tau \rfloor$ | |
| 12: | $newBlk \leftarrow \lceil newIdx/W\tau \rceil$ | |
| 13: | if $oldIdx < newIdx$ then | |
| 14: | return $\langle$max$\{b_\ell|\ell \in [newBlk]\backslash[oldBlk]\}, oldIdx$ mod $W_\tau, -newIdx$ mod $W_\tau\rangle$ | |
| 15: | else | |
| 16: | return $\langle$max $\{b_\ell|\ell \in ([newBlk] \cup ([\tau^{-1}]\backslash[oldBlk]))\}, oldIdx$ mod $W\tau, -newIdx$ mod $W\tau\rangle$ | |

We use $M$ to track the maximum of the current block; the cyclic buffer $b$ keep the maximums of the last $\tau - 1$ completed blocks; c is the current block number and offset is the offset within the block.

In the following sections of this divulgation, we will describe different implementations of the method, described above, to solve different technical problems.

- Example 1: This method can be implemented to monitor a complex telecommunication system. A client then complains about a problem in the service and in response a technical team is dispatched to identify and solve the problem. In this context, the method of this divulgation reduces the time it takes the technical team to identify the problem as they can now focus their efforts on metrics that recently raised an alarm. Understanding the meaning of these metrics, the technical team decides to closely examine a specific component in the system, find a problem and fix it. That is, the method of this divulgation can reduce the time required to identify problems.
- Example 2: This method can be implemented to detect viruses and security intrusions. Thanks to this method, changes resulting from viruses and security intrusions can be easier to spot within many metrics. In contrast, to state of the art system, in which the intrusion may go unnoticed, the method of this divulgation raises a small number of alarms which can be check to identify suspicious behavior associated with a virus or intrusion.

In summary, the above-presented method has applicability in diverse fields that include customer support, software updates, and security. It also has very little overhead and can effectively monitor large systems.

In some embodiments, the methods presented above are computer implemented methods.

Another embodiment of the present subject matter is, an apparatus to detect at least one change in continuous data. This apparatus comprises:

- A module of determining first variations of at least one parameter within data of a first sub-set of the continuous data, and
- A module of determining at least one thresholds using data of a second sub-set of the continuous data, each threshold being associated to one of the parameters, and
- A module of comparing the first variations and the thresholds a change being detected if one of the first variations is above the associated threshold.

In another embodiment, an apparatus to detect changes in continuous data is described. This apparatus comprises at least one processor and at least one memory including computer program code. The at least one memory and the computer program code configured to, with the at least one processor, cause the apparatus at least to perform:

- A step 101 of determining first variations of at least one parameter within data of a first sub-set of the continuous data, and
- A step 102 of determining at least one thresholds using data of a second sub-set of the continuous data, each threshold being associated to one of the parameters and
- A step 103 of comparing the first variations and the thresholds, a change being detected if one of the first variations is above the associated threshold.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as magnetic disks and magnetic tapes, hard drives, or optically readable digital data storage media.

Another embodiment of the present subject matter is a computer-readable medium having embodied thereon a computer program configured to realize the method, presented figure 1, to detect changes in continuous data, the method comprising:

- A step (101) of determining first variations of at least one parameter within data of a first sub-set of the continuous data, and
- A step (102) of determining at least one thresholds using data of a second sub-set of the continuous data, each threshold being associated to one of the parameters and
- A step (103) of comparing the first variations and the thresholds change being detected if one of the first variations is above the associated threshold.

## Claims

1. Method to detect at least one change in continuous data, the method comprising:

   • A step (101) of determining first variations of at least one parameter within data of a first sub-set of the continuous data, and
   • A step (102) of determining at least one thresholds using data of a second sub-set of the continuous data, each threshold being associated to one of the parameters, and
   • A step (103) of comparing the first variations and the thresholds, a change being detected if one of the first variations is above the associated threshold.

2. Method according to claim 1 wherein the step (101) of determining first variations of at least one parameter is configured to determine the first variations using standard deviation ratio based estimator.

3. Method according to claim 2 wherein the step (101) of determining first variations of at least one parameter is configured to calculate the standard deviation ratio base estimator using the following equation:

$$\sigma_{\overline{W}} = \sqrt{\frac{S_{x2} - |\overline{W}|m^2}{|\overline{W}| - 1}}$$

Wherein:

   • $\sigma_{\overline{W}}$ is the first variation of the data of the first sub-set of continuous data $\overline{W}$
   • $|\overline{W}|$ is the number of elements of the fist sub-set of continuous data $\overline{W}$
   • $S_{x2}$ is the sum of the square of the data of the first sub-set of continuous data $\overline{W}$
   • m is the sum of the data of the first sub-set of continuous data $\overline{W}$

4. Method according to the claim 3 wherein the step (101) of determining first variations of at least one parameter is configured, when a new data is incorporated within the first sub-set of continuous data $\overline{W}$, to update $m$ the sum of the data of the first sub-set of continuous data $\overline{W}$, by using the value of the new data and the previous value of $m$, the sum of the data of the sub-set of continuous data $\overline{W}$.

5. Method according to the claim 3 or 4 wherein the step (101) of determining first variations of at least one parameter is configured when a new data is incorporated within the first sub-set of continuous data $\overline{W}$, to update $S_{x2}$ the sum of the square of the data of the sub-set of continuous data $\overline{W}$, by using the value of the new data and the previous value of $S_{x2}$ the sum of the square of the data of the sub-set of continuous data $\overline{W}$.

6. Method according to any of the previous claims wherein the step (102) of determining at least one thresholds, using data of a second sub-set of the continuous data, is configured to determine the threshold as being the maximum of second variations of the parameter associated to the thresholds within data of the second sub-set of the continuous data,

7. Method according to claim 6 wherein the step (102) of determining at least one thresholds, using data of a second sub-set of the continuous data, is configured to determine these second variations using standard deviation ratio based estimator.

8. Method according to claim 7 wherein the step (102) of determining at least one thresholds, using data of a second sub-set of the continuous data, is configured when a new data is incorporated within the second sub-set of continuous data, to update the maximum of these second variations by using the value of the new data and the previous value of the maximum of these second variations.

9. an apparatus to detect at least one change in continuous data, this apparatus comprising:

• A module of determining first variations of at least one parameter within data of a first sub-set of the continuous data, and
• A module of determining at least one thresholds using data of a second sub-set of the continuous data, each threshold being associated to one of the parameters, and
• A module of comparing the first variations and the thresholds, a change being detected if one of the first variations is above the associated threshold.

10. Computer-readable medium having embodied thereon a computer program configured to realize a method to detect at least one change in continuous data, the method comprising:

• A step (101) of determining first variations of at least one parameter within data of a first sub-set of the continuous data, and
• A step (102) of determining at least one thresholds, each threshold being associated to one of the parameters using data of a second sub-set of the continuous data, and
• A step (103) of comparing the first variations and the thresholds, a change being detected if one of the first variations is above the associated threshold.

EP 3 511 856 A1

**Fig. 1**

```
┌─────────────────────────────┐
│  Numerical estimation potential │ ──── 101
│            changes            │
└─────────────────────────────┘
              │
              ▼
┌─────────────────────────────┐
│  Determination of a threshold  │ ──── 102
└─────────────────────────────┘
              │
              ▼
┌─────────────────────────────┐
│  Comparison of the potential change │ ──── 103
│        and the threshold       │
└─────────────────────────────┘
```

Last: 24 hours:
Average: 10, STD: 1

Last: 30 minutes
Average: 20

| 40 | 30 | 20 | 10 | 0 |

Alarm: Behavior in last 30 minutes is inconsistent with last 24 hours

**Fig. 2**

Process A History

Process B History

## Fig. 3

Original Values

Squared Values

## Fig. 4

Europäisches
Patentamt

European
Patent Office

Office européen
des brevets

# EUROPEAN SEARCH REPORT

Application Number

EP 18 15 1797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/284283 A1 (GOLIC JOVAN [IT] ET AL) 11 November 2010 (2010-11-11)<br>* figures 2-11 *<br>* paragraphs [0002] - [0022] *<br>* paragraphs [0040] - [0057] *<br>* paragraphs [0062] - [0081] *<br>* paragraphs [0107] - [0124] *<br>* claims 26-29 *<br>----- | 1-10 | INV.<br>G06F21/55<br>H04L29/06<br>H04W12/12 |
| X | US 2005/197792 A1 (HAEUPTLE MICHAEL [US]) 8 September 2005 (2005-09-08)<br>* figures 1-9 *<br>* paragraphs [0001] - [0006] *<br>* paragraphs [0020] - [0042] *<br>* claims 1-10 *<br>----- | 1-10 | |
| A | US 2014/189872 A1 (WU JIAXU [CN] ET AL) 3 July 2014 (2014-07-03)<br>* figures 1-8 *<br>* paragraphs [0002] - [0011] *<br>* paragraphs [0030] - [0062] *<br>* paragraphs [0067] - [0072] *<br>* paragraphs [0076] - [0091] *<br>* claims 1-7 *<br>----- | 1-10 | TECHNICAL FIELDS SEARCHED (IPC)<br><br>G06F<br>H04L<br>H04W |
| A | US 2014/082730 A1 (VASHIST AKSHAY [US] ET AL) 20 March 2014 (2014-03-20)<br>* figures 3-5 *<br>* paragraphs [0003] - [0025] *<br>* paragraphs [0036] - [0068] *<br>* paragraph [0115] *<br>* claims 1-9 *<br>----- | 1-10 | |

The present search report has been drawn up for all claims

| Place of search | Date of completion of the search | Examiner |
|---|---|---|
| Munich | 19 April 2018 | Erdene-Ochir, O |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 15 1797

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2018

| Patent document cited in search report | | | Publication date | Patent family member(s) | | | Publication date |
|---|---|---|---|---|---|---|---|
| US 2010284283 | A1 | | 11-11-2010 | AT<br>EP<br>US<br>WO | 511296<br>2241072<br>2010284283<br>2009083022 | T<br>A1<br>A1<br>A1 | 15-06-2011<br>20-10-2010<br>11-11-2010<br>09-07-2009 |
| US 2005197792 | A1 | | 08-09-2005 | NONE | | | |
| US 2014189872 | A1 | | 03-07-2014 | BR<br>CN<br>US<br>WO | 112014001804<br>103366119<br>2014189872<br>2013152672 | A2<br>A<br>A1<br>A1 | 14-03-2017<br>23-10-2013<br>03-07-2014<br>17-10-2013 |
| US 2014082730 | A1 | | 20-03-2014 | JP<br>JP<br>US | 6184270<br>2014060722<br>2014082730 | B2<br>A<br>A1 | 23-08-2017<br>03-04-2014<br>20-03-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAN BEN BASAT ; GIL EINZIGER ; ROY FRIEDMAN ; YARON KASSNER.** Efficient Summing over Sliding Windows. *SWAT,* 2016
- **RAN BEN-BASAT ; GIL EINZIGER ; ROY FRIEDMAN.** Efficient network measurements through approximated windows. *CoRR,* 2017

- **PHILLIP B. GIBBONS ; SRIKANTA TIRTHAPURA.** Distributed streams algorithms for sliding windows. *SPAA,* 2002